# EUROPEAN PATENT APPLICATION

(11) **EP 2 902 706 A1**
(43) Date of publication of application: **05.08.2015**
(21) Application number: 14153834.8
(22) Date of filing: 04.02.2014
(51) Int. Cl.: F23N 5/16, F23N 5/24, F23R 3/00, F01D 21/00, F01D 21/10, F01D 21/12, G01N 29/07

(54) **Method for monitoring a combustor**

(71) Applicant: Siemens Aktiengesellschaft, 80333 München (DE)
(72) Inventor: Bulat, Ghenadie, Lincoln, LN6 8BD (GB); Headland, Paul, Lincoln, LN1 1NA (GB)
(74) Representative: Maier, Daniel Oliver

(57) **Abstract**

A method for monitoring a combustor (30) comprising the steps:
- measuring several times a distance between a first wall of the combustor (30) and either a second wall of the combustor (30) or a sensor of the combustor (30) by means of the sensor, and
- concluding from a variation in the distances
- a formation of deposit (84) on the first and/or second wall and/or sensor, and/or
- a temperature change within the combustor (30), and/or
- a pressure change within the combustor (30).

## Description

The present invention is directed to a method for monitoring a combustor and to a combustor being adapted to be monitored by said method. The combustor may be part of a gas turbine engine.

A typical gas turbine engine comprises an air inlet followed by a compressor section in which incoming air is compressed. Afterwards, the compressed air is guided to one or more combustors in a combustor section of the gas turbine engine. A fuel, which may be a gaseous or liquid fuel, is introduced into the combustors and mixed with a portion of the compressed air. Hot combustion gas created by the combustion of the fuel/air mixture in the combustors is directed to a turbine section comprising a set of turbine blades and a set of turbine guide vanes. The combustion gas flowing against the turbine blades leads to a rotation of a shaft of the gas turbine engine to which the turbine blades are attached. As the blades of the compressor stage are also attached to the shaft, a portion of the mechanical power generated by the turbine section is used to operate the compressor section.

A combustor of a gas turbine engine usually comprises at least three parts: a a burner, a swirler and a transition piece. The transition piece is usually in a downstream fluid communication with a combustion volume of the combustor section. Main fuel is introduced into the swirler through a main fuel supply of the burner, while pilot fuel enters the swirler through a separate pilot fuel supply of the burner. The main fuel flow enters the swirler through a set of main fuel nozzles, from where it is guided along swirler vanes, being mixed with incoming compressed air in the process. The resulting fuel/air mixture maintains a burner flame, which extends into the combustion volume.

If a (low-quality) gaseous fuel, which does not conform to specific standards, is supplied to the combustor, contamination of internal cavities can occur. The two main quality issues for gaseous fuels are liquid being carried over with the gas and high sulphur content in the gas. The former can lead to burnout of components, whilst the latter can lead to blockage of passages of the combustor. Both may lead to the combustor and thus the gas turbine engine to shut down.

As with gaseous fuel, liquid fuel quality varies from site to site, whereas a poor quality of the fuel has a negative impact upon the operation of the gas turbine engine, because carbon can build up on key components blocking holes. This may lead to a restriction of the fuel flow.

Service intervals for components of combustors are usually set in fixed intervals, based on experience with similar components in similar conditions. However, the same design of a component can have a very different life span depending on several site factors. These include the above described fuel qualities, the number of running cycles in which the combustor is operated, the ambient temperature, and the air quality. Thus, fixed maintenance intervals may lead to either a maintenance, which is conducted although the condition of the combustor not yet requires such maintenance. Or fixed maintenance intervals may be too long. This may lead to a damaging of the combustor and thus to an unscheduled downtime of the combustor and the gas turbine engine.

US 2009/0097354 A1 discloses a method and system for detecting deposit build up within an ultrasonic flow meter, which is used within a gas or oil pipeline in order to measure the amount of fluid flowing within the pipeline, respectively the flow meter. Measuring the deposit on inside walls of a housing of the flow meter is based on the deposit influencing the speed, frequency or intensity of ultrasonic waves transmitted by ultrasonic transducers.

US 2012/0222484 A1 discloses a movable device for detecting deposits in fluid lines, in particular drainage lines from toilets and washbasins in airplanes. The device is in particular suitable for use in drainage lines, which have a curved run and/or varying diameters. It includes a flexible body, which allows for the device to be inserted into an open end of a drainage line. An ultrasonic transducer is attached to the inserted end of the body. The ultrasonic transducer transmits ultrasonic waves in the axial direction of the drainage line, which are (in part) reflected by the first obstacle they impact on, which may be either the walls of the line due to geometric variations or deposit on the inside of the walls. The reflected signal is received by the transducer as a response signal and may be evaluated with respect to the distance between the transducer and the obstacle and the dimensions of the obstacle. The influence of the geometric variations can be eliminated by comparing the actual response signal with a reference signal of the drainage line measured when the drainage line was new.

The objective of the present invention is to provide a method for monitoring a combustor, in particular in order to adapt maintenance intervals to the actual condition of the combustor.

This objective is achieved by a method according to claim 1. A combustor adapted to be monitored by such a method is subject matter of claim 10. A gas turbine engine comprising such a combustor is claimed in claim 12. Further features and details of the invention are subject matter of the other claims and/or emerge from the description and the figures. Features and details discussed with respect to the method can also be applied to the combustor and the gas turbine engine, and vice versa.

A method for monitoring a combustor according to the invention is characterized by the steps:
- measuring several times by means of a (at least one) sensor of the combustor a distance between a first wall of the combustor and a second wall of the combustor or between the first wall and the sensor, and
- concluding from a variation in the measured distances
- a formation of deposit on the first wall and/or second wall and/or sensor, and/or
- a temperature change within the combustor, and/or
- a pressure change within the combustor.

A respective combustor, which may comprise at least a combustion chamber, a fuel supply and an air supply, is characterized according to the invention by a (at least one) sensor being adapted to measure several times a distance between a first wall of the combustor and either a second wall of the combustor or the sensor, and a (at least one) evaluation unit, the evaluation unit being connected to the sensor to receive measuring signals therefrom and being adapted to process a method according to the invention.

The combustor may further comprise (in flow series) a burner and a transition piece, preferably an axial flow transition piece. The transition piece may comprise a downstream opening adapted for fluid communication with a main combustion chamber, preferably an axial flow main combustion chamber of a combustion section of a gas turbine engine. The main combustion chamber may have a larger cross-sectional area than the prechamber. Further, the burner may comprise a mixing device located radially outwardly of the prechamber and is intended for mixing main fuel and air (and thus comprising nozzles attached to respective supply lines of a main fuel supply and an air supply), the mixing device comprising a swirler being adapted to impose a swirling motion on the fuel/air mixture entering the prechamber about an axial centerline of the prechamber, and a (pilot) burner face located radially inwardly of the swirler and forming an axially upstream wall of the prechamber, the burner face may incorporate a pilot fuel injector and an ignitor.

Measuring a distance between two fixed parts of the combustor and evaluating a possible variation in the distance allows for an easy and cost effective detection of a possible formation of deposit in or on (parts of) the combustor. Further, as temperature changes as well as pressure changes may also effect a distance between two walls of the combustor, the same sensor may be used at the same time to also monitor temperature and pressure changes to which the combustor or parts of it are exposed.

In a preferred embodiment of the method according to the invention, an ultrasonic sensor is used. Thus, as known in the art, the sensor may comprise a transmitter, which is adapted to generate and emit ultrasonic waves, and a receiver, which is adapted to receive the ultrasonic waves after being reflected by an obstacle and transform the received ultrasonic waves into respective signals. The distance between the first wall and the sensor or between the first and second wall may be evaluated from the travel time of the reflected ultrasonic waves.

In a preferred embodiment of the method according to the invention,
- a relative slow decline in the distance is regarded as related to a formation of deposit,
- a relative fast variation in the distance is regarded as related to a pressure change, and
- a variation in the distance at a medium (i.e. somewhere between the relative slow and the relative fast) speed level is regarded as related to a temperature change.

Thus, the speed at which a variation in the distance occurs is evaluated and attributed to one of the three monitoring objectives. Accordingly, making use of the fact that a formation of deposit on walls in or on the combustor components generally occurs very slowly, while pressure changes are generally very fast and further while temperature changes are generally slower than pressure changes and much faster than a formation of deposit, allows to monitor all three objectives using the measuring results of a single respectively the same sensor.

Advantageously, a number of combustor cycles may be derived from concluded temperature changes. Further, combustion dynamics may be derived from concluded pressure changes.

In a preferred embodiment of the method according to the invention, the monitoring results, i.e. the conclusion(s) regarding the formation of deposit, a pressure change and/or a temperature change, may be used to derive a maintenance status for the combustor. This maintenance status may comprise one or several aspects about the general or a specific condition of the combustor. For example, based on the monitoring results, a schedule for maintenance of the combustor may be created and/or adapted. Further, the extent to which the maintenance is conducted may be determined under consideration of the monitoring results. Further, an immediate stop of operation and thus a downtime of the combustor (independent of a maintenance schedule) may be conducted upon consideration of the monitoring results, in order to avoid an anticipated damaging of the combustor.

In a preferred embodiment of the method according to the invention, a (at least one) maintenance value is derived from the monitoring results, i.e. the conclusion(s) regarding the formation of deposit, a pressure change and/or a temperature change, whereas the combustor is set for a stop of operation if the maintenance value exceeds a threshold value. Further, the combustor may be scheduled for maintenance if the maintenance value exceeds a threshold value. Particularly, said (first) threshold for a stop of operation may be chosen to be higher than said (second) threshold for scheduling maintenance. Thus, the threshold values may be chosen to indicate whether a further operation of the combustor is possible without damaging it (first threshold) and - -if so - for how long such a continued operation is allowable until a maintenance should be conducted (second threshold).

Preferably, several sensors may be used at different locations in order to provide optimum monitoring of the whole combustor. In particular, at least one sensor should be placed in each of the sections of the combustor, which are exposed to a specific fluid. Thus, a (separate) sensor may be integrated into one, several or all of
- a cavity for guiding liquid fuel, and/or
- a cavity for guiding gaseous fuel, and/or
- a cavity for guiding combustion gas.

A gas turbine engine according to the invention is characterized by a (at least one) combustor according to the invention. Apart from the combustor, the gas turbine may comprise an air inlet, a compressor section, a turbine section, and an exhaust outlet. Air (or at least oxygen) entering the gas turbine via the air inlet may be compressed in the compressor section and then guided to the combustor(s). The compressed gas may be mixed with fuel and the mixture burned within the combustor(s). The hot combustion gas may then be expanded within the turbine section, thereby creating mechanical power and transmitting said power to a shaft of the gas turbine engine. The combustion gas may then be discharged from the gas turbine engine via the exhaust outlet.

A specific embodiment of a gas turbine engine according to the invention is explained in more detail with reference to the accompanying drawings. The drawings show schematically in
- Figure 1: the gas turbine in a longitudinal sectional view;
- Figure 2: the general structure of a combustor of a gas turbine engine;
- Figure 3: a section of the combustor of the gas turbine according to Fig. 1 in a longitudinal sectional view; and
- Figure 4: a block diagram illustrating a process for monitoring the combustor according to Fig. 3.
The terms upstream and downstream refer to the flow direction of the airflow and/or working gas flow through the engine unless otherwise stated. The terms forward and rearward refer to the general flow of gas through the engine. The terms axial, radial and circumferential are made with reference to a rotational axis 20 of the gas turbine engine.

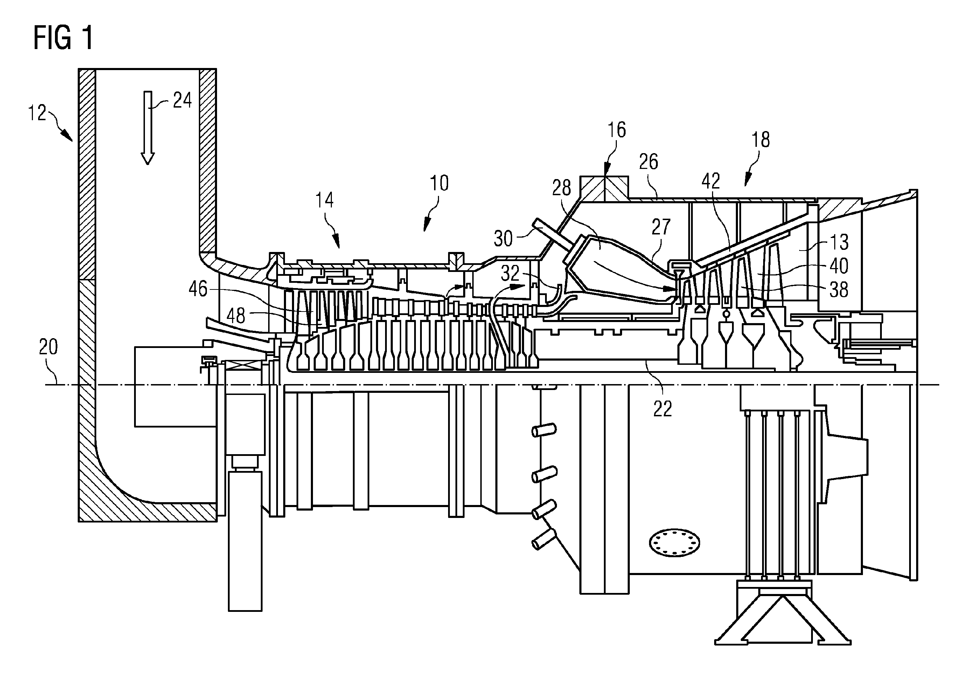

FIG. 1 shows an example of a gas turbine engine 10 according to the invention in a sectional view. The gas turbine engine 10 comprises, in flow series, an air inlet 12, a compressor section 14, a combustor section 16 and a turbine section 18 which are generally arranged in flow series and generally in the direction of the rotational axis 20 (which is thus also the longitudinal axis of the gas turbine engine 10). The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12, is compressed by the compressor section 14 and delivered to the combustor section 16.

The compressor section 14 comprises an axial series of guide vane stages 46 and rotor blade stages 48.

The combustor section 16 comprises a burner plenum 26, one or more combustion chambers 28 defined by a double wall can 27 and at least one combustor 30 fixed to each combustion chamber 28. The combustion chambers 28 and the combustors 30 are located inside the burner plenum 26. The compressed air passing through the compressor section 14 enters a diffuser 32 and is discharged from the diffuser 32 into the burner plenum 26 from where a portion of the air enters the combustors 30 and is mixed with a gaseous or liquid fuel. The fuel/air mixture is then burned and the working gas 34 from the combustion is guided via a transition duct to the turbine section 18.

The turbine section 18 comprises a number of turbine blades 38 attached to the shaft 22. In addition, guiding vanes 40, which are fixed to a stator 42 of the gas turbine 10, are disposed between the turbine blades 38.

The combustion gas from the combustion chamber 28 enters the turbine section 18 and drives the turbine blades 38, which in turn rotate the shaft 22. The guiding vanes 40 serve to optimize the angle of the combustion or working gas on to the turbine blades 38.

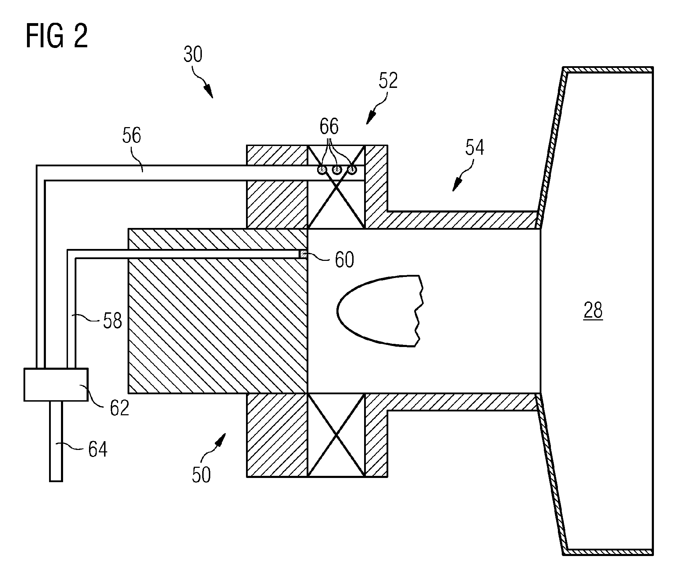

As shown schematically in Fig. 2, the combustor 30 of the gas turbine engine 10 may comprise three parts: a burner 50, a swirler 52, and a transition piece 54, which is connected to the combustion chamber 28. Main fuel is introduced into the swirler 52 by way of the burner 50 through a main fuel supply line 56, while pilot fuel enters the swirler 52 through a pilot fuel supply line 58 comprising a pilot fuel nozzle 60.

The flows of main and pilot fuel are derived from a fuel-split valve 62, which is connected to a common fuel supply 64. The flow of main fuel enters the swirler 52 through a set of main fuel nozzles 66, from where it is guided along swirler vanes while being mixed with incoming compressed air. The resulting fuel/air mixture is burned within the transition piece 54 with the resulting combustion air entering the combustion chamber 28.

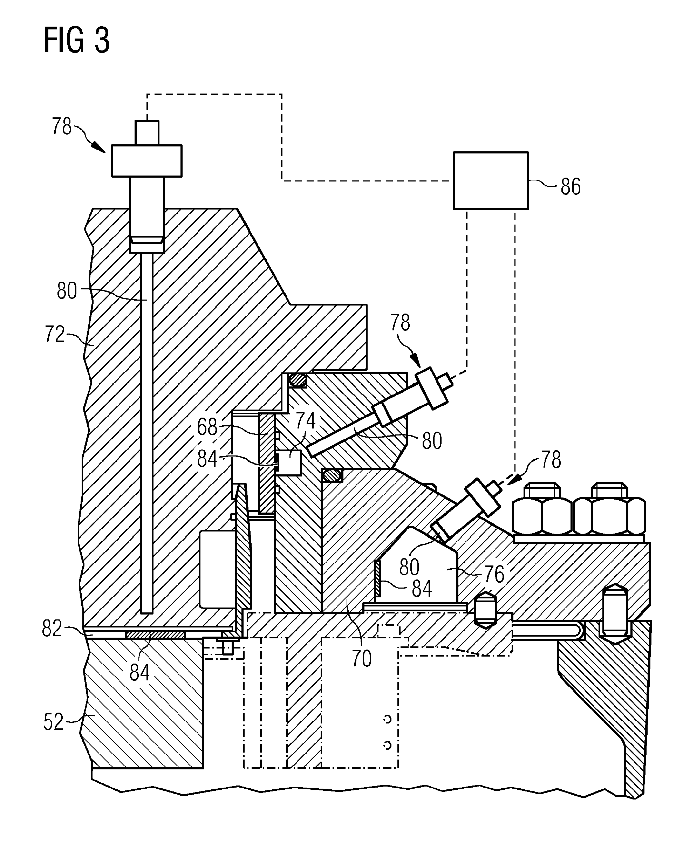

Fig. 3 shows a section of the combustor 30 of the gas turbine engine 10 in more detail. The combustor 30 is designed to be operated with liquid or gaseous fuel. Its burner 50 comprises a main liquid burner 68, a main gas burner 70, and a pilot burner 72. The main liquid burner 68 and the main gas burner 70 each comprise a gallery 74, 76, which is an annular cavity used to distribute the respective fuel to several nozzles for introduction into the swirler 52.

At least one ultrasonic sensor 78 is allocated to all of the parts of the burner 50, i.e. the main liquid burner 68, the main gas burner 70, and the pilot burner 72. The ultrasonic sensors 78 are located in blind holes 80, each of which reaching from the outside of a respective burner casing to almost the galleries 74, 76 respectively the fuel gallery 82 located proximate the pilot burner 72.

Ultrasonic waves transmitted from the sensors 78 travel through the air within the blind holes 80 and through the narrow sections of massive material being situated between the blind holes 80 and the galleries 74, 76 respectively the fuel gallery 82. At least a portion of the ultrasonic waves will then travel through the fluid situated with the galleries 74, 76 and the fuel gallery 82 and will then be reflected at least partly from the walls onto which they impinge. Taking the same route back, a portion of the transmitted ultrasonic waves can be received by the ultrasonic sensors 78 and transformed into electric signals. Evaluating the received signals, in particular with respect to the travel time, allows to determine the distances between the sensors and the respective (sections of the) walls used to reflect the ultrasonic waves. Those distances vary if deposit (indicated schematically at 84) is forming upon the walls.

In an alternative embodiment (not shown) of the combustor 30 through holes (reaching into the galleries 74, 76 and the fuel gallery 82) may be provided for the ultrasonic sensors 78 instead of the blind holes 80. This may be advantageous for transmitting ultrasonic waves into the cavities but disadvantageous with respect to contamination of the ultrasonic sensors 78, as those would be exposed directly to the fluids being present within the cavities.

Formation of deposit 84 on the walls of the gas gallery 76 may in particular be due to a high sulphur content of the gaseous fuel, which may lead to blockage of passages due to formation of silver sulphide. This is particularly the case, if gaseous fuel is supplied, which does not correspond to specific standards for use in such a combustor 30. Such gaseous fuel may also comprise liquids (e.g. from gas compressor), which may be carried over with the gas, leading to burnout of components of the combustor 30. Both, the formation of silver sulphide as well as carried over liquids may cause the gas turbine engine 10 to shut down.

Liquid fuel of poor quality may also have a negative impact on the turbine operation. It may in particular lead to the formation of deposit 84 on those cavities, which are used to guide the liquid fuel within the combustor (in particular the liquid gallery 74). It may further lead to a formation of carbon deposit 84 on other key components of the combustor (including the walls of the fuel gallery 82), as a result of burning the liquid fuel.

By evaluating a variation and in particular a decline in the distances measured by means of the ultrasonic sensors 78, the thickness of the deposit 84 formed on the monitored walls can be determined. Based on those results a maintenance status for the combustor 30 can be created. For example, if a general maintenance schedule for the combustor 30 is based on fixed intervals, monitoring the formation of deposit 84 may be used to alter the intervals when necessary.

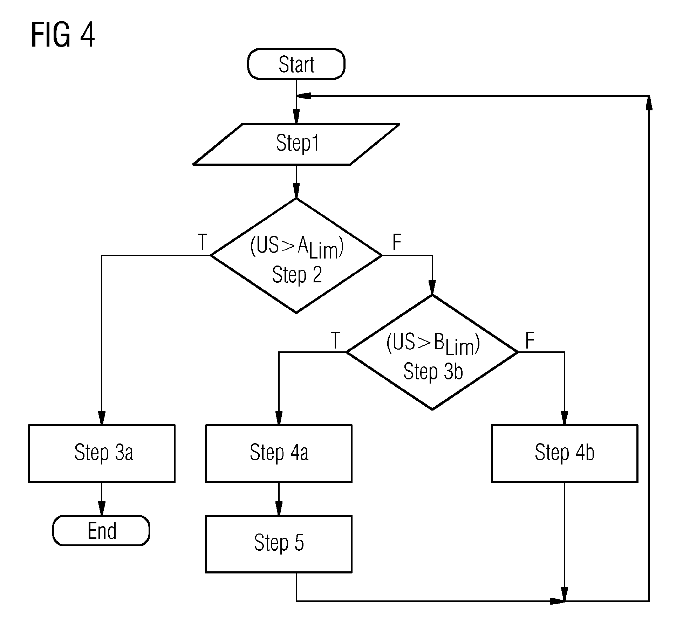

Fig. 4 shows such a process of altering a maintenance schedule when necessary. This process is running automatically based on software in an evaluation unit 86 of the combustor 30. After starting the process, in step 1, the readings from the ultrasonic sensors 78 are transformed into maintenance values (US). With respect to the formation of deposit 84 on the respective walls, the maintenance values (or a combined maintenance value) may be inversely proportional to the measured distances. The maintenance value(s) may then be compared to a first threshold value (A_{Lim}); step 2. If at least one of the maintenance values is larger than the first threshold value (and thus the comparison requirement is true (T)), the operation of the combustor 30 is stopped (automatically) in order to avoid damage due to formation of deposit 84 and/or carry-over of liquid with the gaseous fuel; step 3a.

Otherwise, i.e. if the comparison requirement is false (F) and thus the maintenance values are all smaller than the first threshold value, a further comparison is conducted, determining whether at least one of the maintenance values is larger than a second threshold value (B_{Lim}), which is smaller than the first threshold value (A_{Lim}); step 3b. If this is true (T), a detailed inspection and/or a change out of one or several components of the combustor 30 is planned for a next scheduled maintenance and/or the time until the next maintenance will be conducted is set shorter; step 4a. An additional process step 5 may include giving out a warning sign to maintenance staff, indicating that specific maintenance requirements are oncoming. Otherwise, i.e. if the comparison of the maintenance values with the second threshold value delivers a false (F) result, then the combustor is kept in operation without changing the maintenance status; step 4b. In both cases, measuring the distances by means of the ultrasonic sensors and comparing the readings with the first and second threshold values are continued (i.e. starting with step 1 again).

Variations of the measured distances are influenced not only by formations of deposit 84 on the walls, but also by changing temperatures and pressures within the combustor 30. Those changing temperatures and pressures may therefore also have an influence on the maintenance values, whereas a differentiation between the different reasons for the variations in the distances can be made based on the speed with which those occur. Formations of deposit 84 on the walls progress relatively slowly compared to (relevant) variations in the temperature, which may be due in particular to the operation of the combustor 30 in cycles (i.e. heating the combustor 30 up when beginning operation and cooling it down when terminating operation). Changes in pressure, in particular due to combustion dynamics, are occurring even faster than the temperature changes. Therefore, the speed with which variations in the distances occur may be divided into at least three ranges. A first range with relatively slow variations, representing a formation of deposit 84. A second range defined by a medium speed level of the variations, representing temperature changes, and a third range with relatively fast variations, representing pressure changes. Each of the ranges may be represented by a (different) range of maintenance values. Thus, comparing the maintenance value(s) with the threshold values may comprise comparing a specific maintenance value for each of the ranges with the same or specific (and thus different) first and second threshold values.

## Claims

1. Method for monitoring a combustor (30), **characterized by**
- measuring several times a distance between a first wall of the combustor (30) and either a second wall of the combustor (30) or a sensor of the combustor (30) by means of the sensor, and
- concluding from a variation in the distances
- a formation of deposit (84) on the first and/or second wall and/or sensor, and/or
- a temperature change within the combustor (30), and/or
- a pressure change within the combustor (30).

2. Method according to claim 1, **characterized in that** an ultrasonic sensor (78) is used.

3. Method according to claim 1 or 2, **characterized in that**
- a relatively slow decline in the distances is regarded as related to a formation of deposit (84),
- a relatively fast variation in the distances is regarded as related to a pressure change, and
- a variation in the distances at a medium speed level is regarded as related to a temperature change.

4. Method according to one of the preceding claims, **characterized in that** a number of running cycles of the combustor (30) is derived from concluded temperature changes.

5. Method according one of the preceding claims, **characterized in that** specific combustion dynamics are derived from concluded pressure changes.

6. Method according one of the preceding claims, **characterized in that** a maintenance status is derived from the conclusion(s) regarding the formation of deposit (84), the pressure change and/or the temperature change.

7. Method according to claim 6, **characterized in that** a maintenance value (US) is derived from the conclusion(s) regarding the formation of deposit (84), the pressure change and/or the temperature change, whereas the combustor (30) is set for a stop of operation if the maintenance value (US) exceeds a threshold value (A_{Lim}).

8. Method according to claim 6, **characterized in that** a maintenance value (US) is derived from the conclusion(s) regarding the formation of deposit (84), the pressure change and/or the temperature change, whereas the combustor (30) is scheduled for a maintenance, if the maintenance value (US) exceeds a threshold value (B_{Lim}).

9. Method according to claim 7 and 8, **characterized in that** said threshold (A_{Lim}) for a stop of operation is higher than said threshold (B_{Lim}) for scheduling a maintenance.

10. Combustor (30) comprising a sensor being adapted to measure several times a distance between a first wall of the combustor (30) and either a second wall of the combustor (30) or the sensor, and an evaluation unit (86), the evaluation unit (86) being connected to the sensor to receive measuring signals therefrom and being adapted to process a method according to at least one of the preceding claims.

11. Combustor according to claim 10, **characterized by**
- a cavity for guiding liquid fuel, and/or
- a cavity for guiding gaseous fuel, and/or
- a cavity for guiding combustion gas,
whereas a sensor is provided in one, several or all of said cavities for measuring a distance between a first wall of the respective cavity and either a second wall of the respective cavity or the sensor.

12. Gas turbine engine (10) comprising a combustor (30) according to claim 10 or 11.
